(19) Europäisches Patentamt
European Patent Office
Office européen des brevets

(11) Veröffentlichungsnummer: **0 085 335**
**B1**

(12) # EUROPÄISCHE PATENTSCHRIFT

(45) Veröffentlichungstag der Patentschrift: **02.04.86**

(51) Int. Cl.⁴: **C 09 B 13/02,** C 09 K 19/60

(21) Anmeldenummer: **83100346.2**

(22) Anmeldetag: **17.01.83**

(54) **Flüssigkristallines Dielektrikum, neue Farbstoffe, Verfahren zu ihrer Herstellung und elektrooptisches Anzeigeelement.**

(30) Priorität: **28.01.82 DE 3202761**

(43) Veröffentlichungstag der Anmeldung:
**10.08.83 Patentblatt 83/32**

(45) Bekanntmachung des Hinweises auf die Patenterteilung:
**02.04.86 Patentblatt 86/14**

(84) Benannte Vertragsstaaten:
**AT CH DE FR GB IT LI NL**

(56) Entgegenhaltungen:
**EP - A - 0 069 257**
**DE - A - 2 658 568**

(73) Patentinhaber: **Merck Patent Gesellschaft mit beschränkter Haftung, Frankfurter Strasse 250, D-6100 Darmstadt (DE)**

(72) Erfinder: **Haas, Günther, Dr., Saarstrasse 109, D-6903 Neckargemünd (DE)**
Erfinder: **Weber, Georg, Wilhelm-Leuschner-Strasse 38, D-6106 Erzhausen (DE)**

**EP 0 085 335 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein neues flüssigkristallines Dielektrikum mit einem Gehalt an einem oder mehreren pleochroitischen Farbstoffen für elektrooptische Anzeigeelemente, dadurch gekennzeichnet, dass es mindestens einen Farbstoff der Formel I enthält,

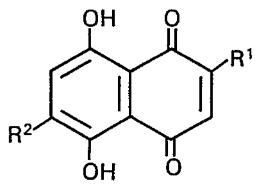

I

worin

$R^1$ und $R^2$ gleich oder verschieden sind und Alkyl oder Alkoxy mit 3 bis 8 C-Atomen oder eine Gruppe Z-Y-, der eine dieser Reste auch Wasserstoff, Methyl, Ethyl, Methoxy oder Ethoxy,

Z R-Ph-, R-Ph-Ph-, R-Cy-, R-Cy-Cy-, R-Cy-Ph- oder R-Ph-Cy-,

Ph jeweils einen 1,4-Phenylenrest,

Cy jeweils einen 1,4-Cyclohexylenrest,

Y $-CH_2-$, -O-, -S-, -NH-, $-CH_2CH_2-$, $-CH_2-O-$, $-CH_2-S-$, $-CH_2-NH-$ oder eine direkte Bindung und

R Wasserstoff, Alkyl oder Alkoxy mit jeweils 1 - 8 C-Atomen bedeuten.

Bei elektrooptischen Anzeigeelementen mit flüssigkristallinen Dielektrika kann der elektrooptische Effekt der Anzeige durch Einlagerung von pleochroitischen Farbstoffen («Gast-Phase») in eine flüssigkristalline Matrix («Wirt-Phase») erzeugt werden. [Vgl. dazu die Übersichten von COX, Mol. Cryst. Liq. Cryst., Band 55, Seiten 1 - 32 (1979); JONES und REEVE, ibid., Band 60, Seiten 99 - 110 (1980); GRAY, Chimia, Band 34, Seiten 47 - 58 (1980) und die dort zitierte Literatur.]

Die dazu bisher verwendeten Farbstoffe, insbesondere die bisher verwendeten roten Farbstoffe, genügen jedoch den an sie gestellten Anforderungen (z.B. hoher Ordnungsgrad, befriedigende Löslichkeit in der Wirt-Phase, Beständigkeit gegen UV-Strahlen und sichtbares Licht sowie gegen Spannungen bis etwa 20 V) nur unzureichend.

Der Erfindung lag die Aufgabe zugrunde, pleochroitische Farbstoffe, insbesondere rote Farbstoffe, aufzufinden, die die Nachteile der bekannten Farbstoffe nicht oder nur in geringerem Masse aufweisen und als Komponenten flüssigkristalliner Dielektrika geeignet sind. Diese Aufgabe wurde durch die Bereitstellung der Verbindungen der Formel I gelöst.

Es wurde gefunden, dass diese Verbindungen der Formel I einen überraschend hohen Ordnungsgrad besitzen und in der flüssigkristallinen Matrix gut löslich sind. Sie sind ausserdem beständig gegen UV-Strahlen und sichtbares Licht sowie gegen Spannungen und weisen auch eine gute chemische Stabilität auf.

Einige Verbindungen der Formel I sind bekannt, nämlich das 2-Anilino- [I, $R^1$ = Anilino, $R^2$ = H; vgl. Helv. Chim. Acta, Band 26, Seite 95 (1943)], das 2-p-Anisidino- (I, $R^1$ = p-Anisidino, $R^2$ = H; ibid.), das 2,6-Bis-anilino- (I, $R^1 = R^2$ = Anilino; ibid.), das 2-p-Tolylthio- (I, $R^1$ = p-Tolylthio, $R^2$ = H; vgl. J. Chem. Soc. 1955, Seite 1095) und das 2,6-Bis-p-Tolylthio-5,8-dihydroxy-1,4-naphthochinon (I, $R^1 = R^2$ = p-Tolylthio; ibid.). Die Verwendung dieser Verbindungen als Bestandteile flüssigkristalliner Dielektrika ist jedoch bisher nicht beschrieben.

Gegenstand der Erfindung sind das angegebene flüssigkristalline Dielektrikum, ferner Verbindungen der angegebenen Formel I mit der Massgabe, dass

(a) $R^1$ und $R^2$ nicht gleichzeitig p-Tolylthio und nicht gleichzeitig Anilino bedeuten;

(b) $R^1$ nur dann p-Tolylthio, Anilino oder p-Anisidino bedeutet, wenn $R^2$ von H verschieden ist;

weiterhin ein Verfahren zur Herstellung der letztgenannten Verbindungen, dadurch gekennzeichnet, dass man ein Diaminonaphthochinon der Formel II

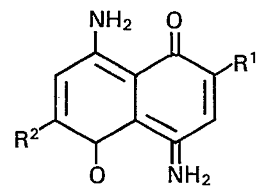

II

worin $R^1$ und $R^2$ die angegebene Bedeutung haben hydrolysiert

oder dass man zur Herstellung einer Verbindung der Formel I ($R^1$ = Z-S- oder Z-NH-) ein Naphthazarinderivat der Formel III

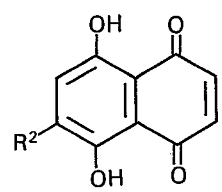

III

worin $R^2$ die angegebene Bedeutung hat mit einer Verbindung der Formel IV

Z-XH IV

worin

X -S- oder -NH- bedeutet und

Z die angegebene Bedeutung hat

umsetzt.

Ausserdem sind Gegenstand der Erfindung die Verwendung einer Verbindung der Formel I nach Anspruch 1 als Komponente eines flüssigkristallinen Dielektrikums für elektrooptische Anzeigeelemente sowie ein elektrooptisches Anzeigeelement auf der Basis einer Guest-Host-Flüssigkristallzelle, dadurch gekennzeichnet, dass es ein flüssigkristallines Dielektrikum nach Anspruch 1 enthält.

Nachstehend haben $R^1$, $R^2$, Z, Ph, Cy, Y, R und X die angegebenen Bedeutungen, sofern nicht ausdrücklich etwas anderes vermerkt ist.

In den Verbindungen der Formeln I bis IV sind die Alkyl- und Alkoxygruppen vorzugsweise unverzweigt; sie enthalten bevorzugt 3 - 7 C-Atome. Alkyl steht dementsprechend insbesondere für Propyl, Butyl, Pentyl, Hexyl oder Heptyl, weiterhin bevorzugt für Octyl, Nonyl, Decyl, Isopropyl, 2-Methyl-propyl,

2-Methyl-butyl, 3-Methyl-butyl, 2-Methyl-pentyl, 3-Methyl-pentyl, 1-Methyl-hexyl, 2-Ethyl-hexyl, 1--Methyl-heptyl; Alkoxy steht insbesondere für Propyloxy, Butyloxy, Pentyloxy, Hexyloxy, Heptyloxy, weiterhin bevorzugt für Octyloxy, Nonyloxy, Decyloxy, Isopropyloxy, 2-Methyl-propyloxy, 2-Methyl--butyloxy, 3-Methyl-butyloxy, 2-Methyl-pentyloxy, 3-Methyl-pentyloxy, 1-Methyl-hexyloxy, 2-Ethyl--hexyloxy, 1-Methyl-heptyloxy. Der Rest R sowie einer der Reste $R^1$ und $R^2$ kann ausserdem auch Methyl, Ethyl, Methoxy oder Ethoxy bedeuten.

Der Rest Z ist vorzugsweise R-Ph-, der Rest Y vorzugsweise -S-, -NH- oder eine direkte Bindung.

Dementsprechend sind Gegenstand der Erfindung insbesondere diejenigen Verbindungen der Formel I, in denen mindestens einer der genannten Reste eine der vorstehend angegebenen bevorzugten Bedeutungen hat. Einige bevorzugte Gruppen von Verbindungen können durch die folgenden Teilformeln Ia bis Id ausgedrückt werden, die der Formel I entsprechen und worin die nicht näher bezeichneten Reste die bei Formel I angegebene Bedeutung haben, worin jedoch in

Ia $R^1$ R-Ph-Y- und
Y -S-, -NH- oder eine direkte Bindung bedeutet;

Ib $R^1$ R-Ph-S- und
$R^2$ H oder R-Ph-S bedeutet,
wobei die Reste R in den Gruppen $R^1$ und $R^2$ gleich oder verschieden sein können;

Ic $R^1$ R-Ph-NH- und
$R^2$ H bedeuten;

Id $R^1$ R-Ph- und
$R^2$ H bedeuten.

In den Verbindungen der Formel I sind, soweit sie Cyclohexylenreste enthalten, diejenigen Stereoisomeren bevorzugt, worin die beiden 1,4-Substituenten jeweils in trans-Stellung zueinander stehen.

Die Verbindungen der Formel I werden im übrigen nach an sich bekannten Methoden hergestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Ausgangsstoffe können gewünschtenfalls auch in situ gebildet werden, derart, dass man sie aus dem Reaktionsgemisch nicht isoliert, sondern sofort weiter zu den Verbindungen der Formel I umsetzt.

Die Verbindungen der Formel I können insbesondere durch Hydrolyse der Diaminonaphthochinone der Formel II erhalten werden, vorteilhaft durch Reaktion mit einer Mineralsäure wie Schwefelsäure in etwa 2 bis 98%iger, vorzugsweise etwa 10 bis 30%iger wässeriger Lösung bei Temperaturen zwischen etwa 10 und etwa 150, vorzugsweise zwischen etwa 60 und 110°C.

Die Ausgangsstoffe der Formel II sind beispielsweise erhältlich durch Umsetzung der entsprechenden 1,5-Dinitro-3-$R^1$-7-$R^2$-naphthaline mit Schwefel in rauchender Schwefelsäure, diejenigen der Formel II, in denen $R^1$ und/oder $R^2$ R-Ph- bedeuten, auch durch Arylierung von 4,8-Diamino-1,5-naphthochinon mit Diazoniumsalzen der Formel R-Ph-$N^{2\oplus}$$An^{\ominus}$ (worin $An^{\ominus}$ ein bei aromatischen Diazoniumsalzen übliches Anion, z.B. Chlorid, Bromid, Sulfat, bedeutet) oder durch Ullmann-Reaktion aus 4,8-Diamino-2,6-dibrom-1,5-naphthochinon und Jodbenzolderivaten der Formel R-Ph-J.

Zur Herstellung einer Verbindung der Formel I ($R^1$ = Z-S- oder Z-NH-, insbesondere R-Ph-S- oder R-Ph-NH-) kann man ferner ein Naphthazarinderivat der Formel III mit einer Verbindung der Formel IV, nämlich einem Mercaptan der Formel Z-SH oder einem Amin der Formel Z-$NH_2$ umsetzen. Dabei arbeitet man zweckmässig in Gegenwart oder Abwesenheit eines zusätzlichen inerten Lösungsmittels bei Temperaturen zwischen etwa 0 und etwa 200, vorzugsweise zwischen 20 und 120°. Als inerte Lösungsmittel eignen sich beispielsweise Alkohole wie Methanol, Ethanol, Isopropanol. Ein Überschuss der Verbindung der Formel IV kann ebenfalls als Lösungsmittel dienen. Geht man von Naphthazarin (III, $R^2$ = H) selbst aus, so kann man die Reaktionsbedingungen so steuern, dass diese Verbindung mit einem oder zwei Molekülen IV reagiert. Verwendet man z.B. das Mercaptan Z-SH im Überschuss, so entsteht vorwiegend das disubstituierte Produkt (I, $R^1$ = $R^2$ = Z-S-), verwendet man III ($R^2$ = H) im Überschuss, so entsteht vorwiegend das monosubstituierte Produkt (I, $R^1$ = Z-S-, $R^2$ = H). Ähnlich gelingt es, bei längerem Erhitzen von III ($R^2$ = H) mit überschüssigem Amin Z-$NH_2$ ein disubstituiertes Produkt (I, $R^1$ = $R^2$ = Z-NH-) zu erhalten, während bei Raumtemperatur vorwiegend das monosubstituierte Produkt (I, $R^1$ = Z-NH-, $R^2$ = H) entsteht, selbst wenn das Amin im Überschuss eingesetzt wird.

Die erfindungsgemässen Dielektrika bestehen aus 2 bis 15, vorzugsweise 3 bis 12 Komponenten, darunter mindestens einem Naphthochinonfarbstoff der Formel I. Die anderen Bestandteile werden vorzugsweise ausgewählt aus den nematischen oder nematogenen Substanzen, insbesondere den bekannten Substanzen aus den Klassen der Azoxybenzole, Benzylidenaniline, Biphenyle, Terphenyle, Phenyl- oder Cyclohexylbenzoate, Cyclohexancarbonsäure--phenyl- oder cyclohexylester, Phenylcyclohexane, Cyclohexylbiphenyle, Cyclohexylcyclohexane, Cyclohexylnaphthaline, 1,4-Bis-cyclohexylbenzole, 4,4'--Bis-cyclohexylbiphenyle, Phenyl- oder Cyclohexylpyrimidine, Phenyl- oder Cyclohexyldioxane, ggf. halogenierten Stilbene, Benzylphenylether, Tolane und substituierten Zimtsäuren. Die wichtigsten als Bestandteile flüssigkristalliner Wirt-Materialien infrage kommenden Verbindungen lassen sich durch die Formel V charakterisieren,

$$R^3\text{-A-B-E-}R^4 \qquad \text{V}$$

worinj A und E je ein carbo- oder heterocyclisches Ringsystem aus der aus 1,4-disubstituierten Benzol- und Cyclohexanringen, 4,4'-disubstituierten Biphenyl-, PHenylcyclohexan- und Cyclohexylcylohexansystemen, 2,5-disubstituierten Pyrimidin- und 1,3-Dioxanringen, 2,6-disubstituiertem Naphthalin, Di- und Tetrahydronaphthalin, Chinazolin und Tetrahydrochinazolin gebildeten Gruppe,

| | | |
|---|---|---|
| B | -CH=CH- | -N(O)=N- |
| | -CH=CG | -CH=N(O)- |
| | -C≡C- | $-CH_2-CH_2-$ |
| | -CO-O- | $-CH_2-O-$ |
| | -CO-S- | $-CH_2-S-$ |
| | -CH=N- | -COO-Ph-COO- |
| | -N=N- | oder eine C-C-Einfachbindung, |

G Halogen vorzugsweise Chlor, oder CN, und $R^3$ und $R^4$ Alkyl, Alkoxy, Alkanoyloxy oder Alkoxycarbonyloxy mit bis zu 18, vorzugsweise bis zu 8 Kohlenstoffatomen, oder einer dieser Reste auch CN, NC, $NO_2$, $CF_3$, F, Cl oder Br bedeuten. Bei den meisten dieser Verbindungen sind $R^3$ und $R^4$ voneinander verschieden, wobei einer dieser Reste meist eine Alkyl- oder Alkoxygruppe ist. Aber auch andere Varianten der vorgesehenen Substituenten sind gebräuchlich. Viele solcher Substanzen oder auch Gemische davon sind im Handel erhältlich.

Die erfindungsgemässen Dielektrika enthalten in der Regel 0,1 bis 15, vorzugsweise 0,5 bis 10, insbesondere 1 bis 5 Gewichtsprozent einer oder mehrerer Verbindungen der Formel I. Die Herstellung der erfindungsgemässen Dielektrika erfolgt in an sich üblicher Weise. In der Regel wird die in geringerer Menge verwendete Komponente in der den Hauptbestandteil ausmachenden Komponente gelöst, zweckmässig bei erhöhter Temperatur. Wenn dabei eine Temperatur oberhalb des Klärpunkts des Hauptbestandteils gewählt wird, kann die Vollständigkeit des Lösevorgangs besonders leicht beobachtet werden.

Durch geeignete Zusätze können die flüssigkristallinen Dielektrika nach der Erfindung so modifiziert werden, dass sie in allen bisher bekannt gewordenen Arten von Guest-Host-Anzeigeelementen verwendet werden können. Derartige Zusätze sind dem Fachmann bekannt und sind in der Literatur ausführlich beschrieben. Beispielsweise können Substanzen zur Veränderung der dielektrischen Anisotropie, der Viskosität, der Leitfähigkeit und/oder der Orientierung der nematischen Phasen zugesetzt werden. Derartige Substanzen sind zum Beispiel in den DE-OS 2 209 127, 2 240 864, 2 321 632, 2 338 281, 2 450 088, 2 637 430, 2 853 728 und 2 902 177 beschrieben.

Die folgenden Beispiele sollen die Erfindung erläutern, ohne sie zu begrenzen. In den Beispielen Bedeutet F. den Schmelzpunkt und K. den Klärpunkt einer flüssigkristallinen Substanz in Grad Celsius. Prozentangaben bedeuten Gewichtsprozent.

*Beispiel 1*

Eine Suspension von 1 g 2,6-Diphenyl-4,8-diamino-1,5-naphthochinon in 200 ml 20%iger $H_2SO_4$ wird 5 Std. auf 100° erhitzt. Man kühlt ab, extrahiert mit $CH_2Cl_2$, dampft ein und erhält 2,6-Diphenyl-5,8-dihydroxy-1,4-naphthochinon, rote Nadeln, F. 170 bis 173°.

*Beispiele 2 bis 51*

Analog Beispiel 1 erhält man durch Hydrolyse der entsprechenden 4,8-Diamino-1,5-naphthochinone:

2. 2-Phenyl-5,8-dihydroxy-1,4-naphthochinon.
3. 2-p-Tolyl-5,8-dihydroxy-1,4-naphthochinon.
4. 2-p-Ethylphenyl-5,8-dihydroxy-1,4-naphthochinon.
5. 2-p-n-Propylphenyl-5,8-dihydroxy-1,4-naphthochinon.
6. 2-p-n-Butylphenyl-5,8-dihydroxy-1,4-naphthochinon.
7. 2-p-n-Pentylphenyl-5,8-dihydroxy-1,4-naphthochinon.
8. 2-p-n-Hexylphenyl-5,8-dihydroxy-1,4-naphthochinon.
9. 2-p-n-Heptylphenyl-5,8-dihydroxy-1,4-naphthochinon.
10. -2-p-n-Octylphenyl-5,8-dihydroxy-1,4-naphthochinon.
11. 2-p-Methoxyphenyl-5,8-dihydroxy-1,4-naphthochinon.
12. 2-p-Ethoxyphenyl-5,8-dihydroxy-1,4-naphthochinon.
13. 2-p-n-Propyloxyphenyl-5,8-dihydroxy-1,4-naphthochinon.
14. 2-p-n-Butyloxy-5,8-dihydroxy-1,4-naphthochinon.
15. 2-p-n-Pentyloxy-5,8-dihydroxy-1,4-naphthochinon.
16. 2-p-n-Hexyloxy-5,8-dihydroxy-1,4-naphthochinon.
17. 2-p-n-Heptyloxy-5,8-dihydroxy-1,4-naphthochinon.
18. 2-p-n-Octyloxy-5,8-dihydroxy-1,4-naphthochinon.
19. 2,6-Bis-p-tolyl-5,8-dihydroxy-1,4-naphthochinon.
20. 2,6-Bis-p-ethylphenyl-5,8-dihydroxy-1,4-naphthochinon.
21. 2,6-Bis-p-n-propylphenyl-5,8-dihydroxy-1,4-naphthochinon.
22. 2,6-Bis-p-n-butylphenyl-5,8-dihydroxy-1,4-naphthochinon.
23. 2,6-Bis-p-n-pentylphenyl-5,8-dihydroxy-1,4-naphthochinon.
24. 2,6-Bis-p-n-hexylphenyl-5,8-dihydroxy-1,4-naphthochinon.
25. 2,6-Bis-p-n-heptylphenyl-5,8-dihydroxy-1,4-naphthochinon.
26. 2,6-Bis-p-n-octylphenyl-5,8-dihydroxy-1,4-naphthochinon.
27. 2,6-Bis-p-methoxyphenyl-5,8-dihydroxy-1,4-naphthochinon.
28. 2,6-Bis-p-ethoxyphenyl-5,8-dihydroxy-1,4-naphthochinon.
29. 2,6-Bis-p-n-propyloxyphenyl-5,8-dihydroxy-1,4-naphthochinon.
30. 2,6-Bis-p-n-butyloxyphenyl-5,8-dihydroxy-1,4-naphthochinon.
31. 2,6-Bis-p-n-pentyloxyphenyl-5,8-dihydroxy-1,4-naphthochinon.
32. 2,6-Bis-p-n-hexyloxyphenyl-5,8-dihydroxy-1,4-naphthochinon.
33. 2,6-Bis-p-n-heptyloxyphenyl-5,8-dihydroxy-1,4-naphthochinon.
34. 2,6-Bis-p-n-octyloxyphenyl-5,8-dihydroxy-1,4-naphthochinon.
35. 2,6-Dipropyl-5,8-dihydroxy-1,4-naphthochinon.
36. 2,6-Dioctyl-5,8-dihydroxy-1,4-naphthochinon.

37. 2,6-Dipropyloxy-5,8-dihydroxy-1,4-naphthochinon.
38. 2,6-Dioctyloxy-5,8-dihydroxy-1,4-naphthochinon.
39. 2-Methyl-6-p-propyloxyphenyl-5,8-dihydroxy-1,4-naphthochinon.
40. 2-Ethyl-6-p-butyloxyphenyl-5,8-dihydroxy-1,4-naphthochinon.
41. 2-Methoxy-6-p-pentyloxyphenyl-5,8-dihydroxy-1,4-naphthochinon.
42. 2-Ethoxy-6-p-hexyloxyphenyl-5,8-dihydroxy-1,4-naphthochinon.
43. 2-(4'-Pentyloxy-4-biphenylyl)-5,8-dihydroxy-1,4-naphthochinon.
44. 2-(trans-4-Pentyl-cyclohexyl)-5,8-dihydroxy-1,4-naphthochinon.
45. 2-[trans-4-(trans-4-Pentylcyclohexyl)-cyclohexyl]-5,8-dihydroxy-1,4-naphthochinon.
46. 2-(p-trans-4-Pentylcyclohexyl-phenyl)-5,8-dihydroxy-1,4-naphthochinon.
47. 2-(trans-4-p-Pentyloxyphenyl-cyclohexyl)-5,8-dihydroxy-1,4-naphthochinon.
48. 2-p-Hexyloxybenzyl-5,8-dihydroxy-1,4-naphthochinon.
49. 2-p-Hexyloxyphenoxy-5,8-dihydroxy-1,4-naphthochinon.
50. 2-(2-p-Hexyloxyphenylethyl)-5,8-dihydroxy-1,4-naphthochinon.
51. 2-p-Hexyloxybenzyloxy-5,8-dihydroxy-1,4-naphthochinon.

*Beispiel 52*

Eine Lösung von 5 g 5,8-Dihydroxy-1,4-naphthochinon und 1,1 g Thiophenol in 500 ml Ethanol wird 10 Minuten gekocht und abgekühlt. Man filtriert, konzentriert das Filtrat auf etwa 200 ml und filtriert das ausgefallene 2-Phenylthio-5,8-dihydroxy-1,4-naphthochinon ab. F. 133 - 134°.

*Beispiele 53 bis 68*

Analog Beispiel 52 erhält man mit den entsprechenden Phenylmercaptanen:

53. 2-p-Ethylphenylthio-5,8-dihydroxy-1,4-naphthochinon.
54. 2-p-Propylphenylthio-5,8-dihydroxy-1,4-naphthochinon.
55. 2-p-Butylphenylthio-5,8-dihydroxy-1,4-naphthochinon.
56. 2-p-Pentylphenylthio-5,8-dihydroxy-1,4-naphthochinon.
57. 2-p-Hexylphenylthio-5,8-dihydroxy-1,4-naphthochinon.
58. 2-p-Heptylphenylthio-5,8-dihydroxy-1,4-naphthochinon.
59. 2-p-Octylphenylthio-5,8-dihydroxy-1,4-naphthochinon.
60. 2-p-Methoxyphenylthio-5,8-dihydroxy-1,4-naphthochinon.
61. 2-p-Ethoxyphenylthio-5,8-dihydroxy-1,4-naphthochinon.
62. 2-p-Propyloxyphenylthio-5,8-dihydroxy-1,4-naphthochinon.
63. 2-p-Butyloxyphenylthio-5,8-dihydroxy-1,4-naphthochinon.
64. 2-p-Pentyloxyphenylthio-5,8-dihydroxy-1,4-naphthochinon.
65. 2-p-Hexyloxyphenylthio-5,8-dihydroxy-1,4-naphthochinon.
66. 2-p-Heptyloxyphenylthio-5,8-dihydroxy-1,4-naphthochinon.
67. 2-p-Octyloxyphenylthio-5,8-dihydroxy-1,4-naphthochinon.
68. 2-p-Hexyloxybenzylthio-5,8-dihydroxy-1,4-naphthochinon.

*Beispiel 69*

Eine Lösung von 1,9 g 5,8-Dihydroxy-1,4-naphthochinon in 130 ml Ethanol wird bei 20° mit einer Lösung von 7 g Thiophenol in 30 ml Ethanol versetzt. Man kocht das Gemisch 15 Minuten und kühlt ab. Das 2,6-Bis-phenylthio-5,8-dihydroxy-1,4-naphthochinon wird abfiltriert. F. 206 - 207°.

*Beispiele 70 bis 85*

Analog Beispiel 69 erhält man mit Überschüssen der entsprechenden Phenylmercaptane:

70. 2,6-Bis-(p-ethylphenylthio)-5,8-dihydroxy-1,4-naphthochinon.
71. 2,6-Bis-(p-propylphenylthio)-5,8-dihydroxy-1,4-naphthochinon.
72. 2,6-Bis-(p-butylphenylthio)-5,8-dihydroxy-1,4-naphthochinon.
73. 2,6-Bis-(p-pentylphenylthio)-5,8-dihydroxy-1,4-naphthochinon.
74. 2,6-Bis-(p-hexylphenylthio)-5,8-dihydroxy-1,4-naphthochinon.
75. 2,6-Bis-(p-heptylphenylthio-5,8-dihydroxy-1,4-naphthochinon, F. 161 - 162°.
76. 2,6-Bis-(p-octylphenylthio)-5,8-dihydroxy-1,4-naphthochinon.
77. 2,6-Bis-(p-methoxyphenylthio)-5,8-dihydroxy-1,4-naphthochinon.
78. 2,6-Bis-(p-ethoxyphenylthio)-5,8-dihydroxy-1,4-naphthochinon.
79. 2,6-Bis-(p-propyloxyphenylthio)-5,8-dihydroxy-1,4-naphthochinon.
80. 2,6-Bis-(p-butyloxyphenylthio)-5,8-dihydroxy-1,4-naphthochinon.
81. 2,6-Bis-(p-pentyloxyphenylthio)-5,8-dihydroxy-1,4-naphthochinon.
82. 2,6-Bis-(p-hexyloxyphenylthio)-5,8-dihydroxy-1,4-naphthochinon.
83. 2,6-Bis-(p-heptyloxyphenylthio)-5,8-dihydroxy-1,4-naphthochinon.
84. 2,6-Bis-(p-octyloxyphenylthio)-5,8-dihydroxy-1,4-naphthochinon.
85. 2,6-Bis-(p-hexyloxybenzylthio)-5,8-dihydroxy-1,4-naphthochinon.

*Beispiel 86*

Man trägt 1,9 g 5,8-Dihydroxy-1,4-naphthochinon in 30 ml p-Toluidin ein und rührt 10 Std. bei 20°. Nach Zutropfen von 80 ml Ethanol fällt 2-p-Toluidino-5,8-dihydroxy-1,4-naphthochinon aus.

*Beispiele 87 bis 102*

Analog Beispiel 86 erhält man mit den entsprechenden Anilinderivaten:

87. 2-p-Ethylanilino-5,8-dihydroxy-1,4-naphthochinon.
88. 2-p-Propylanilino-5,8-dihydroxy-1,4-naphthochinon.
89. 2-p-Butylanilino-5,8-dihydroxy-1,4-naphthochinon.
90. 2-p-Pentylanilino-5,8-dihydroxy-1,4-naphthochinon.
91. 2-p-Hexylanilino-5,8-dihydroxy-1,4-naphthochinon.
92. 2-p-Heptylanilino-5,8-dihydroxy-1,4-naphthochinon.
93. 2-p-Octylanilino-5,8-dihydroxy-1,4-naphthochinon.
94. 2-p-Methoxyanilino-5,8-dihydroxy-1,4-naphthochinon.
95. 2-p-Ethoxyanilino-5,8-dihydroxy-1,4-naphthochinon.
96. 2-p-Propyloxyanilino-5,8-dihydroxy-1,4-naphthochinon.
97. 2-p-Butyloxyanilino-5,8-dihydroxy-1,4-naphthochinon.
98. 2-p-Pentyloxyanilino-5,8-dihydroxy-1,4-naphthochinon.
99. 2-p-Hexyloxyanilino-5,8-dihydroxy-1,4-naphthochinon.
100. 2-p-Heptyloxyanilino-5,8-dihydroxy-1,4-naphthochinon.
101. 2-p-Octyloxyanilino-5,8-dihydroxy-1,4-naphthochinon.
102. 2-p-Hexyloxybenzylamino-5,8-dihydroxy-1,4-naphthochinon.

*Beispiel 103*

Ein Gemisch aus 1,9 g 5,8-Dihydroxy-1,4-naphthochinon und 40 ml Anilin wird 8 Std. auf 100° erhitzt. Nach dem Abkühlen und Verdünnen mit Ethanol erhält man 2,6-Bis-anilino-5,8-dihydroxy-1,4-naphthochinon.

*Beispiel 104 bis 120*

Analog Beispiel 103 erhält man mit den entsprechenden Anilinderivaten:

104. 2,6-Bis-p-toluidino-5,8-dihydroxy-1,4-naphthochinon.
105. 2,6-Bis-p-ethylanilino-5,8-dihydroxy-1,4-naphthochinon.
106. 2,6-Bis-p-propylanilino-5,8-dihydroxy-1,4-naphthochinon.
107. 2,6-Bis-p-butylanilino-5,8-dihydroxy-1,4-naphthochinon.
108. 2,6-Bis-p-pentylanilino-5,8-dihydroxy-1,4-naphthochinon.
109. 2,6-Bis-p-hexylanilino-5,8-dihydroxy-1,4-naphthochinon.
110. 2,6-Bis-p-heptylanilino-5,8-dihydroxy-1,4-naphthochinon.
111. 2,6-Bis-p-octylanilino-5,8-dihydroxy-1,4-naphthochinon.
112. 2,6-Bis-p-methoxyanilino-5,8-dihydroxy-1,4-naphthochinon.
113. 2,6-Bis-p-ethoxyanilino-5,8-dihydroxy-1,4-naphthochinon.
114. 2,6-Bis-p-propyloxyanilino-5,8-dihydroxy-1,4-naphthochinon.
115. 2,6-Bis-p-butyloxyanilino-5,8-dihydroxy-1,4-naphthochinon.
116. 2,6-Bis-p-pentyloxyanilino-5,8-dihydroxy-1,4-naphthochinon.
117. 2,6-Bis-p-hexyloxyanilino-5,8-dihydroxy-1,4-naphthochinon.
118. 2,6-Bis-p-heptyloxyanilino-5,8-dihydroxy-1,4-naphthochinon.
119. 2,6-Bis-p-octyloxyanilino-5,8-dihydroxy-1,4-naphthochinon.
120. 2,6-Bis-p-hexyloxybenzylamino-5,8-dihydroxy-1,4-naphthochinon.

Die folgenden Beispiele sind solche für erfindungsgemässe Dielektrika:

*Beispiel A*

Ein flüssigkristallines Dielektrikum aus

18% 4-(trans-4-Propylcyclohexyl)-benzonitril,
14% 4-(trans-4-Butylcyclohexyl)-benzonitril,
25% 4-(trans-4-Pentylcyclohexyl)-benzonitril
15% 4-(trans-4-Heptylcyclohexyl)-benzonitril und
7% 4-(trans-4-Pentylcyclohexyl)-4'-cyanbiphenyl
7% 4-(trans-4-Pentylcyclohexyl)4'-(trans-4-propylcyclohexyl)-biphenyl,
6% 4-Pentyl-4'-cyan-p-terphenyl,
8% trans-4-Butylcyclohexancarbonsäure-(p-trans-4-propyl-cyclohexylphenylester),

wird mit 1% 2-Phenylthio-5,8-dihydroxy-1,4-naphthochinon versetzt. Das erhaltene Dielektrikum zeigt eine rote Farbe mit einem Absorptionsmaximum bei 523 nm.

*Beispiel B*

In einem flüssigkristallinen Dielektrikum aus

22% 4-(trans-4-Propylcyclohexyl)-benzonitril,
19% 4-(trans-4-Butylcyclohexyl)-benzonitril,
30% 4-(trans-4-Pentylcyclohexyl)-benzonitril
15% 4-(trans-4-Pentylcyclohexyl)-4'-cyanbiphenyl und
14% 4-Pentyl-4'-cyan-p-terphenyl

löst man 0,8% 2,6-Bis-(p-propylphenylthio)-5,8-dihydroxy-1,4-naphthochinon; $\lambda_{max}$ 538 nm.

*Beispiel C*

In dem in Beispiel B genannten Basis-Dielektrikum löst man 2% 2-p-Propylphenylthio-5,8-dihydroxy-1,4-naphthochinon; $\lambda_{max}$ 522 nm.

*Beispiel D*

In dem in Beispiel A genannten Basis-Dielektrikum löst man 1,8% 2,6-Bis-(p-heptylphenylthio)-5,8-dihydroxy-1,4-naphthochinon; $\lambda_{max}$ 539 nm.

*Beispiel E*

In dem in Beispiel A genannten Basis-Dielektrikum löst man 2,5% 2-p-Heptylphenylthio-5,8-dihydroxy-1,4-naphthochinon; $\lambda_{max}$ 522 nm.

## Patentansprüche

1. Flüssigkristallines Dielektrikum mit einem Gehalt an einem oder mehreren pleochroitischen Farbstoffen für elektrooptische Anzeigeelemente, dadurch gekennzeichnet, dass es mindestens einen Farbstoff der Formel I enthält,

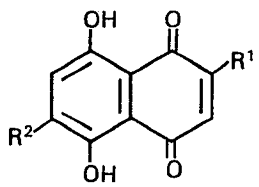

I

worin

$R^1$ und $R^2$ gleich oder verschieden sind und Alkyl oder Alkoxy mit 3 bis 8 C-Atomen oder eine Gruppe Z-Y-, der eine dieser Reste auch Wasserstoff, Methyl, Ethyl, Methoxy oder Ethoxy,

Z R-Ph-, R-Ph-Ph-, R-Cy-, R-Cy-Cy-, R-Cy-Ph- oder R-Ph-Cy-,

Ph jeweils einen 1,4-Phenylenrest,

Cy jeweils einen 1,4-Cyclohexylenrest,

Y $-CH_2-$, -O-, -S-, -NH-, $-CH_2CH_2-$, $-CH_2-O-$, $-CH_2-S-$, $-CH_2-NH-$ oder eine direkte Bindung und

R Wasserstoff, Alkyl oder Alkoxy mit jeweils 1 - 8 C-Atomen bedeuten.

2. Verbindungen der Formel I nach Anspruch 1 mit der Massgabe, dass

(a) $R^1$ und $R^2$ nicht gleichzeitig p-Tolylthio und nicht gleichzeitig Anilino bedeuten;

(b) $R^1$ nur dann p-Tolylthio, Anilino oder p-Anisidino bedeutet, wenn $R^2$ von H verschieden ist.

3. Verfahren zur Herstellung von Verbindungen der Formel I nach Anspruch 1 mit der Massgabe, dass

(a) $R^1$ und $R^2$ nicht gleichzeitig p-Tolylthio und nicht gleichzeitig Anilino bedeuten;

(b) $R^1$ nur dann p-Tolylthio, Anilino oder p-Anisidino bedeutet, wenn $R^2$ von H verschieden ist,

dadurch gekennzeichnet, dass man ein Diaminonaphthochinon der Formel II

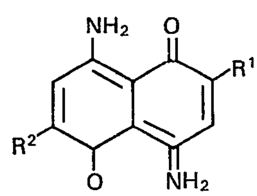

II

worin $R^1$ und $R^2$ die angegebene Bedeutung haben hydrolysiert

oder dass man zur Herstellung einer Verbindung der Formel I ($R^1$ = Z-S- oder Z-NH-) ein Naphthazarinderivat der Formel III

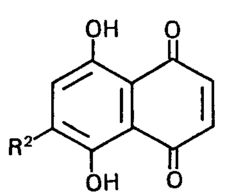

III

worin $R^2$ die angegebene Bedeutung hat mit einer Verbindung der Formel IV

Z-XH IV

worin

X -S- oder -NH- bedeutet und

Z die angegebene Bedeutung hat

umsetzt.

4. Verwendung einer Verbindung der Formel I nach Anspruch 1 als Komponente eines flüssigkristallinen Dielektrikums für elektrooptische Anzeigeelemente.

5. Elektrooptisches Anzeigeelement, dadurch gekennzeichnet, dass es ein flüssigkristallines Dielektrikum nach Anspruch 1 enthält.

## Claims

1. Liquid crystal dielectric containing one or more pleochroic dyestuffs for electrooptical display elements, characterised in that it contains at least one dyestuff of the formula I

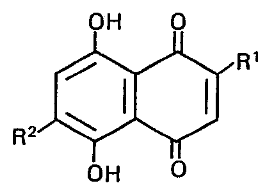

I

wherein

$R^1$ and $R^2$ are identical or different and are alkyl or alkoxy with 3 to 8 C atoms or a group Z-Y-, and one of these radicals can also be hydrogen, methyl, ethyl, methoxy or ethoxy,

Z is R-Ph-, R-Ph-Ph-, R-Cy-, R-Cy-Cy-, R-Cy-Ph- or R-Ph-Cy-,

Ph is in each case a 1,4-phenylene radical,

Cy is in each case a 1,4-cyclohexylene radical,

Y is $-CH_2-$, -O-, -S-, -NH-, $-CH_2CH_2-$, $-CH_2-O-$, $-CH_2-S-$, $-CH_2-NH-$ or a direct band and

R is hydrogen or alkyl or alkoxy with in each case 1 - 8 C atoms.

2. Compounds of the formula I according to claim 1, with the proviso that

(a) $R^1$ and $R^2$ are not simultaneously p-tolylthio and not simultaneously anilino;

(b) $R^1$ is only p-tolylthio, anilino or p-anisidino if $R^2$ is other than H.

3. Process for the preparation of compounds of the formula I according to claim 1, with the proviso that

(a) $R^1$ and $R^2$ are not simultaneously p-tolylthio and not simultaneously anilino;

(b) $R^1$ is only p-tolylthio, anilino or p-anisidino if $R^2$ is other than H,

characterised in that a diaminonaphthoquinone of the formula II

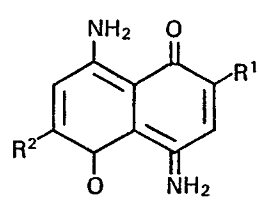

II

wherein $R^1$ and $R^2$ have the meanings given, is hydrolysed,
or in that, for the preparation of a compound of the formula I ($R^1$ is Z-S- or Z-NH-), a naphthazarine derivative of the formula III

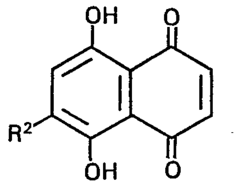

III

wherein $R^2$ has the meanings given,
is reacted with a compound of the formula IV

Z-XH IV

wherein
X is -S- or -NH-and
Z has the meanings given.

4. Use of a compound of the formula I according to claim 1 as a constituent of a liquid crystal dielectric for electrooptical display elements.

5. Electrooptical display element, characterised in that it contains a liquid crystal dielectric according to claim 1.

**Revendications**

1. Diélectrique à cristaux liquides pour éléments d'affichage électro-optiques contenant un ou plusieurs colorants pléochroïques, caractérisé en ce qu'il renferme au moins un colorant de formule I

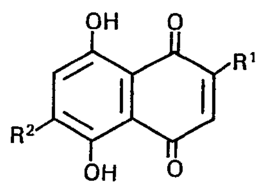

I

dans laquelle
- $R^1$ et $R^2$ sont identiques ou différents et représentent un alkyle ou un alcoxy avec 3 à 8 atomes de C ou un groupe Z-Y-, l'un de ces restes représentant également l'hydrogène, un méthyle, un éthyle, un méthoxy ou un éthoxy,
- Z représente R-Ph-, R-Ph-Ph-, R-Cy-, R-Cy-Cy, R-Cy-Ph- ou R-Ph-Cy-,
- Ph représente chaque fois un reste phénylène-1,4,
- Cy représente chaque fois un reste cyclohexylène-1,4,
- Y représente $-CH_2-$, -O-, -S-, -NH-, $-CH_2CH_2-$, $-CH_2-O-$, $-CH_2-S-$, $-CH_2-NH-$ ou une liaison directe et
- R représente l'hydrogène, un alkyle ou un alcoxy avec chaque fois 1 à 8 atomes de C.

2. Composés de formule I selon la revendication 1, dans la mesure où
(a) $R^1$ et $R^2$ ne représentent pas simultanément un p-tolylthio et pas simultanément un anilino;
(b) $R^1$ ne représente un p-tolylthio, un anilino ou un p-anisidino que lorsque $R^2$ est différent de H.

3. Procédé pour la préparation de composés de formule I selon la revendication 1, dans la mesure où
(a) $R^1$ et $R^2$ ne représentent pas simultanément un p-tolylthio et pas simultanément un anilino;
(b) $R^1$ ne représente un p-tolylthio, un anilino ou un p-anisidino que lorsque $R^2$ est différent de H,
caractérisé en ce qu'on hydrolyse un diaminonaphtoquinone de formule II

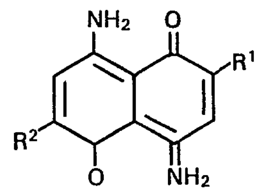

II

dans laquelle $R^1$ et $R^2$ ont la signification indiquée ou que, pour la préparation d'un composé de formule I ($R^1$ = Z-S- ou Z-NH-), on fait réagir un dérivé de naphtazarine de formule III

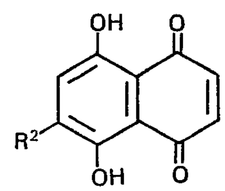

III

dans laquelle $R^2$ a la signification indiquée, avec un composé de formule IV

Z-XH IV

où
X représente -S- ou -NH- et
Z a la signification indiquée.

4. Utilisation d'un composé de formule I selon la revendication 1 en tant que constituant d'un diélectrique à cristaux liquides pour des éléments d'affichage électro-optiques.

5. Elément d'affichage électro-optique, caractérisé en ce qu'il contient un diélectrique à cristaux liquides selon la revendication 1.